# EUROPEAN PATENT APPLICATION

(11) **EP 0 798 333 A1**
(43) Date of publication of application: **01.10.1997**
(21) Application number: 95909957.3
(22) Date of filing: 22.02.1995
(51) Int. Cl.: C08J 5/00, B01D 33/04, B01D 35/20

(54) **PROCESS FOR PRODUCTION OF POLYTETRAFLUOROETHYLENE MOLDING USING LUBRICANT, BELT-PRESS DEHYDRATOR, PROCESS FOR DEHYDRATION OF SOLID WET MATTERS**

(30) Priority: 25.02.1994 JP 28187/94; 28.12.1994 JP 326959/94
(71) Applicant: DAIKIN INDUSTRIES, LTD., Kita-ku, Osaka 530 (JP)
(72) Inventor: MURAKAMI, Shinji Yodogawa-seisakusho, Settsu-shi Osaka 566 (JP); UCHIDA, Tatsuro Yodogawa-seisakusho, Settsu-shi Osaka 566 (JP); KAWACHI, Shoji Yodogawa-seisakusho, Settsu-shi Osaka 566 (JP)
(74) Representative: Türk, Gille, Hrabal, Leifert
(86) International application number: JP9500256
(87) International publication number: WO9523178

(57) **Abstract**

A process for production of a polytetrafluoroethylene (PTFE) molding comprising the step of adding a lubricant to an aqueous dispersion of PTFE to co-coagulate PTFE and a swelling agent and obtain a lubricant-containing wet PTFE powder, the step of molding the wet powder to obtain a molding, and the step of removing the lubricant from the molding. This process can reduce the number of the process steps. Further, the present invention provides a process and apparatus for dehydrating a solid wet matter characterized in that a difference is provided between the travelling speeds of a pair of filter cloth belts clamping the solid wet matter, and at least one of the belts is oscillated in the transverse direction of the belt.

## Description

### TECHNICAL FIELD

The present invention relates to a process for preparing a molded polytetrafluoroethylene (PTFE) with a lubricant, and more particularly relates to a process for preparing a molded PTFE with wet PTFE powder containing the lubricant homogeneously dispersed therein, and by a smaller number of steps required.

The present invention also relates to a belt press dewatering machine and a dewatering process for removing water from solid wet materials.

### BACKGROUND ART

Molding of PTFE obtained by an emulsion polymerization has been conducted with a lubricant. For example, Japanese Patent Publication Kokoku No. 61-54578 and Japanese Patent Publication kokai No. 50-34661 disclose a process for preparing a molded PTFE, comprising the following steps;
① coagulating an aqueous PTFE dispersion to obtain wet PTFE powder,
② drying wet PTFE powder to obtain PTFE fine powder,
③ mixing a lubricant in an amount of 15 to 25 % by weight based on PTFE fine powder to obtain PTFE powder containing the lubricant,
④ preforming PTFE powder to a cylindrical shape, putting the obtained preformed PTFE into a cylinder of an extruding machine and pressing with a ram to obtain a paste-extruded PTFE molding, and
⑤ removing the lubricant by heating or extraction, and then sintering.

The above-mentioned process has such problems that there are many steps required, it takes much time (usually 10 to 20 hours), especially in the drying step for obtaining PTFE fine powder, and a higher cost is required. Also there is an another problem involved such that it takes much time to mix and impregnate PTFE fine powder with lubricants. That is to say, for mixing the lubricants, it is necessary to pour the specified amounts of lubricants and PTFE fine powder in a vessel which is then sealed airtight, mix the lubricants for 5 to 20 minutes for dispersion and absorption thereof, and then conduct ripening at room temperature for 5 to 15 hours with the vessel being sealed airtight for homogeneous impregnation of the lubricants. Furthermore even if such a lengthy ripening is conducted, there is a tendency that the lubricants are difficult to be dispersed homogeneously into PTFE fine powder and in the subsequent step for molding, a molding failure occurs. Also a necessity of preforming causes such a disadvantage that molding cannot be carried out continuously.

Further US Patent No. 2593582 discloses the following process, wherein a step for mixing lubricants into PTFE fine powder is eliminated;
① mixing the lubricants into an aqueous PTFE dispersion to co-coagulate PTFE and the lubricants and obtain wet PTFE powder containing the lubricants,
② drying the wet powder at 110°C to remove water therefrom and obtain PTFE powder containing the lubricants,
③ obtaining a molded article from PTFE powder containing the lubricants after removing water,
④ removing the lubricants by heating or extracting, and then sintering.

However, according to the process, there is a problem that in the step for removing water at 110°C, a part of the lubricants is also removed, thus making lubricant distribution non-uniform and causing a molding failure. Also there is a case where almost all of the lubricants are removed in the step for removing water, depending on a kind of the lubricant. Thus it is necessary to use a lubricant having a high boiling point. But in that case, there occurs a problem that the removal of the lubricant after molding becomes difficult and if the lubricant remains in the molded article, coloring of the molded article after the sintering occurs. It can be considered to increase a mixing amount of the lubricants into an aqueous dispersion so that a sufficient amount of the lubricants remains when removing. However, the lubricants are not mixed in wet powder in an amount exceeding a certain value. If much amount of the lubricants are mixed, non-coagulated polymers increase because there is a tendency that an aqueous dispersion per se becomes stable as a solution. Furthermore like the firstly cited process, there are problems such that the water removing process takes much time (usually 10 to 20 hours) and a higher cost is required.

The present invention was made to solve the above-mentioned problems, and the object of the present invention is to provide a process for preparing a molded PTFE with a small number of steps by using wet PTFE powder containing lubricants dispersed homogeneously.

Another object of the present invention is to provide a dewatering machine and a process for dewatering the solid wet materials by applying a shear to the solid wet materials in an optional direction and amount which makes it possible to obtain a dewatered material to be easily handled.

Further object of the present invention is to provide a dewatering machine and a process for dewatering for obtaining PTFE powder containing a lubricant by removing water from wet PTFE powder containing the lubricant in the above-mentioned process for preparing a molded PTFE.

### DISCLOSURE OF THE INVENTION

The present inventors have made intensive studies to achieve the above-mentioned object, and have found that as compared with the above-mentioned two conventional PTFE powder containing lubricants, the wet PTFE powder containing lubricants, which is obtained by adding the lubricants to an aqueous PTFE dispersion and co-coagulating PTFE and the lubricants,
① assures more homogeneous dispersion of the lubricants, and therefore the obtained molded products offer less molding failure, a smooth surface and an excellent mechanical properties, and also
② can eliminate a drying step with heating in a preparation process, and assures easy operations, short treating time and selective separation of only excessive water from the powder with the lubricants being kept in the state of being homogeneously dispersed, thus having completed the present invention.

Though for the conventional PTFE powder containing the lubricants, only a paste extrusion molding was generally applicable, the wet PTFE powder containing the lubricants of the present invention made it possible to widely apply the other molding methods, for example, a screw extrusion molding, molding by reduction rolls, filling or coating by a press.

That is to say, the present invention relates to a process for preparing a molded PTFE with the lubricants, which comprises;
adding the lubricants to an aqueous PTFE dispersion to co-coagulate PTFE and the lubricants and obtain wet PTFE powder containing the lubricants,
adjusting a water content of the wet powder, if necessary (removal of water by drying with heating is not included),
molding the wet powder to obtain a molded article,
removing the lubricants from the molded article, and if necessary, sintering the molded article.

The present inventors also have made intensive studies to achieve the above-mentioned object, and completed a belt press dewatering machine characterized in that in dewatering solid wet materials by using running one pair of strip-like filter cloth belts which have surfaces opposite to each other and sandwiching the materials in a gap formed between the surfaces, the machine is equipped with means for making running speeds of the belts being different from each other and means for vibrating at least one of the belts in the transverse direction of the belt.

Also the invention relates to a process for dewatering of solid wet materials, which is characterized in that in dewatering the solid wet materials by using running one pair of strip-like filter cloth belts which have surfaces opposite to each other and sandwiching the materials in a gap formed between the surfaces, running speeds of the belts are made being different from each other and at least one of the belts is vibrated in the transverse direction of the belt.

The present inventors have further made intensive studies to achieve the above-mentioned object, and completed a belt press dewatering machine which is used in the step for adjusting a water content of the wet PTFE powder containing the lubricants and is characterized in that in dewatering of the wet PTFE powder containing the lubricants by using running one pair of strip-like filter cloth belts which have surfaces opposite to each other and sandwiching the wet PTFE powder in a gap formed between the surfaces, the machine is equipped with means for making running speeds of the belts being different from each other and means for vibrating at least one of the belts in the transverse direction of the belt.

Also the present invention relates to a process for dewatering of the wet PTFE powder containing the lubricants in the step for adjusting a water content of the powder, which is characterized in that in dewatering by using running one pair of strip-like filter cloth belts which have surfaces opposite to each other and sandwiching the powder in a gap formed between the surfaces, running speeds of the belts are made being different from each other and at least one of the belts is vibrated in the transverse direction of the belt.

The above-mentioned machine and process for dewatering of the present invention are used for various solid wet materials such as sludges and wet synthesized resins after polymerized besides the solid wet PTFE powder containing the lubricants.

### BRIEF DESCRIPTION OF THE DRAWINGS

Fig. 1 is an illustrative side view of a belt press dewatering machine of one example of the present invention.

Fig. 2 is an illustrative front view of a belt press dewatering machine of one example of the present invention.

Fig. 3 is a perspective view of a support plate of a belt press dewatering machine of one example of the present invention.

### PREFERRED EMBODIMENTS FOR THE INVENTION

The aqueous PTFE dispersion of the present invention is one obtained by emulsion polymerization of tetrafluoroethylene (TFE) or one obtained by dispersing, in water in the presence of surfactants, fine PTFE particles in the form of powder, which are prepared by suspension polymerization or solution polymerization. Among them, the aqueous PTFE dispersion obtained by emulsion polymerization of TFE is preferable because of a low aggregating property thereof.

As the PTFE, there are not only a polymer of TFE alone but also a modified PTFE which was modified by copolymerizing other comonomers in such a small amount not to give a melt fluidity. As the comonomers, there are hexafluoropropene, chlorotrifluoroethylene, perfluoro(alkyl vinyl ether), perfluoro(alkoxy vinyl ether), trifluoroethylene and perfluoroalkylethylene. A proportion of the comonomers varies with a kind thereof, and when perfluoro(alkyl vinyl ether) or perfluoro(alkoxy vinyl ether) is used as the comonomer, it can be used, as a copolymerization component, in an amount of usually up to 2 % by weight, preferably 0.01 to 1 % by weight.

Standard specific gravity (SSG) of PTFE is not particularly limited, but is preferably from 2.10 to 2.24, more preferably from about 2.14 to about 2.20 in view of orientation and fibrillation when molded.

The standard specific gravity (SSG) is decided by a ratio of a weight in air of a sample (standard sample) prepared by a standard method to a weight of water (23°C) having the same volume as the sample. The standard sample is prepared in such a manner as mentioned below. An amount of 12 g of dry polymer powder is put flatly between the aluminum foils in a 2.86 cm diameter mold of a cylindrical shape, is gradually pressed for about 30 seconds up to a final pressure of about 352 kg/cm² and is maintained at that pressure for two minutes. The resulting preformed article is then put in an air oven of 290°C. The oven temperature is raised from 290°C to 380°C at a rate of 2°C/min., and is kept at 380°C for 30 minutes. Then the oven is cooled down to 294°C at a rate of 1°C/min., and then the article is taken out of the oven to allow to stand at 23°C for three hours.

The standard specific gravity is usually postulated to indirectly show a number average molecular weight of a TFE polymer containing no modifier. Generally, the lower the SSG is, the larger the particle weight.

PTFE in an aqueous PTFE dispersion obtained by emulsion polymerization of TFE is present as fine particles having an average particle size of preferably 0.05 to 0.6 µm, more preferably 0.1 to 0.5 µm, further preferably 0.2 to 0.4 µm. The PTFE particles content in an aqueous dispersion is preferably from 5 to 70 % by weight, more preferably from 10 to 40 % by weight, further preferably from 10 to 20 % by weight.

A filler may be added to an aqueous PTFE dispersion. As the fillers, there are used, for example, carbonaceous powder, carbonaceous fiber, inorganic powder, inorganic fiber, metal or alloy powder, organic powder or fiber and the like. More particularly there are carbonaceous powder or fiber such as carbon black, carbon fiber and graphite, oxidizing powder such as feldspar, silica, alumina, titanium oxide and iron oxide, inorganic powder such as silicon nitride, carbon nitride, aluminum nitride, boron nitride, zirconium carbide, silicon carbide, tungusten carbide, nickel carbide, zirconium sulfate, barium sulfate, kaolin, clay, talc, glass beads and glass baloon, inorganic fiber such as glass fiber, alumina fiber, potassium titanate fiber and silica fiber, metal or alloy powder such as copper alloy, zinc oxides, molybdenum disulfide, aluminum and aluminum alloy, and organic powder or fiber such as perfluoroalkoxy resin, perfluoroethylenepropene resin, polychlorotrifluoroethylene resin, polyamide imide resin, polyether sulphone resin, polyetherimide resin, polysulphone resin, polyphenylene sulfide resin, polycarbonate resin, polyimide resin, polyphenylene oxide resin, oxybenzoyl polyester resin and liquid crystal polymer. These fillers are added to enhance a mechanical properties (wear resistance, compressive strength and cold flow resistance), electrical property (electrostatic elimination) and the like of the molded article. A desirable amount of the fillers is not more than 98 % by weight, preferably not more than 60 % by weight, more preferably not more than 40 % by weight based on a total weight of PTFE and fillers for the reason that a form of the molded article is maintained by PTFE.

In the process (hereinafter also referred to as a molding process) for preparing the molded PTFE article with the lubricants of the present invention, when the lubricants are added to an aqueous dispersion, PTFE particles gather at the side of the lubricants having an affinity higher than water, thus, by coagulation, obtaining wet powder in which the lubricants are dispersed homogeneously among the PTFE particles.

Any of lubricants easily filled among the PTFE particles and easily removable after the molding may be used, and the lubricants having a boiling point not more than a melting point of PTFE are preferable. This is because it is preferable that the lubricants can be easily removed by heating after obtaining the molded article. Also either of lubricants having a property less miscible with water and those soluble with water may be used, but the former lubricants having a property less miscible with water are mainly used. This is because the use of the lubricants soluble with water results in dissolution thereof in water of the aqueous dispersion and therefore, as compared with the case where the lubricants having a property less miscible with water are used, much amount of the lubricants are required, and it becomes difficult to remove water from wet PTFE powder containing the lubricants after the completion of coagulation, and also when the wet powder is washed with water to remove coagulants and the like from the wet powder, the lubricants are also removed, thus making washing difficult. As such lubricants having a property less miscible with water, there are solvent naphtha, petroleum ether, liquid paraffin and the like, which have been used as the lubricants for PTFE. Among them, those having a surface tension at 25°C of preferably not more than 40 dyn/cm, more preferably not more than 30 dyn/cm are used for the reason of a good affinity with PTFE. The lubricants are added in an amount of preferably 5 to 150 mℓ, more preferably 14 to 75 mℓ of a volume at 25°C based on 100 g of PTFE in the aqueous PTFE dispersion, for the reason that the lubricants uniformly cover the surfaces of the PTFE particles. In order to adjust the PTFE particle size to be obtained, two or more kinds of the above-mentioned lubricants may be used. The surface tension of the aqueous dispersion and then an interfacial tension with the PTFE particles are decreased by adding a small amount (about 0.01 to about 10 % by weight) of water soluble lubricants, for example, fluoro- and hydrocarbon-alcohols, ether solvents such as diol, triol and ethylene glycol monobutyl ether, and ketone solvent such as acetone and methyl ethyl ketone to the lubricants having a property less miscible with water or by adding a small amount (about 0.01 to about 10 % by weight) of fluoro- and hydrocarbon-surfactants to the lubricants having a property less miscible with water, thus making it possible to obtain a smaller particle size of PTFE.

In order to co-coagulate PTFE and the lubricants, coagulants may be used. This is because the addition of the lubricants makes the coagulation difficult. As the coagulants, there may be used any one usually used for the coagulation of the aqueous PTFE dispersion, for example, water soluble salts such as magnesium chlorides, aluminum chlorides and aluminum nitrate, mineral acids such as nitric acids, hydrochloric acids and sulfuric acids, water soluble organic liquids such as alcohols and acetone, and cationic surfactants.

The lubricants may be added when the coagulation is started or when the aqueous dispersion becomes in the state of a slurry with agitation. Adding the lubricants to the dispersion being in the form of a slurry gives an effect such that it becomes unnecessary to add the coagulants.

For the coagulation, besides batch type systems, there are used continuous type systems, for example, a high shear machine such as a Pipe Line Mixer and a Pipe Line Mill and a ribbon granulator, in which starting materials are transferred and coagulated continuously. Also besides mechanical shearing such as agitation, it is possible to coagulate by ultrasonic wave, and to use mechanical shearing together with ultrasonic wave.

The high shear machine is used to instantly apply a high shear evenly to the aqueous PTFE dispersion and make the dispersion being in the form of a slurry. Applying instantly the shear evenly enables the resulting aggregate to be homogeneous. In this point, as compared with a batch type requiring a long-time agitation and a conventional capillary tube method (US Patent No. 3,046,263) wherein the shear is apt to become uneven, a very excellent homogeneous slurry can be obtained. Also since the shear can be changed by varying the number of rotations of the mixer, a slurrying degree can be easily controlled.

The high shear machine to be used in the present invention may be one as shown, for example, in Japanese Patent Publication Kokai No. 2-239911, which is equipped with an agitation blade rotating at a high speed and a stator. The machine has such a structure that there is a very small gap between the agitation blade and the stator and a strong shear is applied to the PTFE dispersion in that gap by a velocity gradient of the agitation blade and the stator. There may be used other structures such that a rotor rotating reversely is used together with the stator, or a very small gap is provided between the mixing shell itself and the agitation blade. The preferable high shear machine may be a Pipe Line Mixer and a Pipe Line Mill, but are not limited thereto. The machine capable of instantly applying a high shear evenly may be used.

There is a case where PTFE particles stick to the sliding parts of the agitation blade and stator of the Pipe Line Mixer. In that case, flushing may be conducted on the sliding parts with water, preferably ion exchange water from the stator for water sealing thereof.

The present invention enables the wet PTFE powder containing the lubricants to be obtained continuously by pre-mixing the emulsified lubricants and aqueous PTFE dispersion in the specified ratio, feeding the pre-mixed lubricants and dispersion to the high shear machine continuously and adding coagulants at one point of the water seal. Also the wet PTFE powder containing the lubricants may be obtained continuously without the coagulants by feeding the lubricants quantitatively to the aqueous PTFE dispersion in the form of a slurry and agitating with the high shear machine. Further the wet PTFE powder containing the lubricants and a filler may be obtained continuously by pre-mixing the filler in the aqueous PTFE dispersion or in the seal water or lubricants and then feeding quantitatively.

The wet PTFE powder containing the lubricants is obtained by removing water with a sieve or the like after precipitation of the PTFE particles containing the lubricants by co-coagulation, or by washing with water after, if necessary, removing water with a sieve to eliminate an un-coagulated polymer. In that case, water soluble lubricants may be mixed into the wet PTFE powder containing the lubricants. By doing so, in the subsequent molding, even if water remains in the PTFE particles, water functions to act as the lubricants.

The wet powder of the present invention is the wet PTFE powder containing the lubricants, which is obtained after the co-coagulation, and water remains in the powder. Water remains in the wet powder in an amount of generally 1 to 200 % by weight, more generally 5 to 100 % by weight based on the PTFE particles. Therefore the wet powder after the co-coagulation may be molded as it is, or the one after the water content was selectively decreased in various water content adjusting steps may be molded. Also water may be added to the wet powder for transportation, and then the powder may be molded.

In the water content adjusting steps, besides the filtration and pressing (compression), a high frequency, electroosmosis, centrifugal dewatering and the like methods may be employed. The water content adjusting step may be conducted separately from the molding step, or as a continuous step combined with the molding step. If water is removed by drying with heating, the lubricants are also removed by heating or heating is not uniform, thereby making the lubricant distribution non-uniform.

As the methods for molding the thus obtained wet powder, there are a paste extrusion molding, ram extrusion molding, screw extrusion molding, belt press, molding with mixing rolls, molding by reduction rolls, compression molding with a profile die, molding with two rolls having a rough section, filling or coating with reduction rolls and a press, and a method to remove water from the powder containing low-boiling-point lubricants with a kneader or by kneading a necessary amount thereof by hands and then to coat the freely deformable powder having a proper hardness directly to the applying parts as a sealant.

There can be considered some proper combinations of the above-mentioned methods, for example, a plurality of reduction rolls, a kneader and reduction rolls, a kneader and a ram extrusion molding machine, a kneading roll or reduction rolls and a ram extrusion molding machine, a kneading roll or reduction rolls and a paste extrusion molding machine, a press and reduction rolls, a screw extrusion molding machine and reduction rolls, and others. In case of the combinations, a whole or a part of water is removed in the preceding molding step. With these molding methods, there can be obtained various forms of molded articles such as tapes, sheets, films, tubes, pipes, rods, cables, articles filled with wet PTFE powder, and coated articles. Also there can be obtained cables or flat cables covered with these molded articles. Furthermore porous PTFE articles can be obtained by stretching the molded sheets or films in the known manner.

In the above-mentioned molding, water is removed by pressing the wet powder. The reason why only water is removed is that an affinity of PTFE with the lubricants is larger than that of PTFE with water. The difference in the affinity is easily verified by comparing a contact angle of the lubricant on the PTFE sheet with that of water on the sheet. The degree of water removal varies with an amount of the lubricants, a kind of a molded article, and the like. In case where much amount of water remains without being removed, the obtained molded article suffers from a binding failure or cracking. Therefore the water content remaining therein should be preferably less than about 1 % by weight, more preferably less than about 0.1 % by weight.

Then the lubricants are removed from the water-removed molded article. As the methods for removing the lubricants, heating or extracting is employed. Extracting the lubricants is conducted in such a manner that the molded article is passed through the solvent such as trichloroethane, trichloroethylene, tetrachloroethylene, alcohol, acetone, water or the like for 1 to 3 minutes, though a kind of the solvent varies with the lubricant used. The lubricant is removed by heating the molded article at a temperature not less than a boiling point of the lubricants and not more than a melting point of PTFE as mentioned below. In that case, a drying speed increases, for instance, by steam drying. In case of the lubricant having a boiling point higher than that of steam, heating may further be conducted after the steam drying.

The thus obtained molded article may be in the un-sintered state or may be further sintered if necessary.

The molded article is sintered by heating usually at 340° to 400°C, preferably 360° to 380°C.

In case where a screw extrusion machine is used in the process for preparation of the present invention, the coagulation and molding can be continuously conducted.

In the process for molding of the present invention, an article which is filled with the wet powder is usually a porous one. When filling the porous article with the wet powder, the lubricants are first added to the aqueous PTFE dispersion in the same manner as mentioned above, and PTFE and the lubricants are co-coagulated to obtain the co-coagulated dispersion. Then the co-coagulated particles are taken out from the dispersion in the same manner as mentioned above to obtain the wet PTFE powder containing the lubricants. After the above-mentioned water content adjusting step is taken if necessary, the porous article is filled with the wet powder to obtain the one filled with the powder. In case where the size of holes on the porous article is small, it is preferable to immerse it in the aqueous PTFE dispersion prior to filling the wet powder. Subsequently in the same manner as mentioned above, the lubricants are removed from the obtained powder-filled article which is then sintered if necessary.

As the porous articles, there are, for example, the porous metal layer on the metal, one fabricated in the form of grating like a metal net, a glass cloth, and the like.

As the methods for molding so as to remove water content by pressing, there are, for example, those using the reduction rolls and the press mentioned above.

According to this filling method, it is possible to fill in a large size of holes which cannot be filled by the conventional method of recoating the aqueous PTFE dispersion. Also recoating can be conducted without drying and sintering, thus enhancing a productivity.

PTFE is applied to cables, making the best use of various properties thereof such as heat resistance, toughness and flexibility, low dielectric dissipation factor, low dielectric constant, high volume resistivity and surface resistivity, non-water-absorbing property, weatherability and chemical resistance. For example, core wire is passed through a mandrel of a paste extrusion molding machine, and then the extrusion, drying and sintering are conducted, followed by lining. In such a conventional method, only molding of a reduction ratio smaller than the modified PTFE could be made in case of a PTFE homopolymer, and cables of a smaller diameter could not be made. Even if manufactured, there was a problem of fabrication, thereby causing less productivity. Therefore modified PTFE has been used for such molding. The molding method of the present invention enables the lubricants to be dispersed homogeneously and the fibrillation thereof is difficult to advance, thus enabling thin wall covering of wire by the use of the PTFE homopolymer. The cables having an excellent electrical property can be obtained by the use of the PTFE homopolymer rather than the modified PTFE.

According to the process for dewatering of the solid wet materials of the present invention (hereinafter also referred to as a dewatering process), one pair of running filter cloth belts having surfaces opposite to each other is used, and the solid wet materials are sandwiched in a gap formed between the surfaces, thus pressing the materials by a surface pressure of the belts to be dewatered. In that case, effective dewatering is assured by making running speeds of the belts being different from each other and vibrating at least one of the belts in the transverse direction of the belt.

The dewatering process of the present invention and the dewatering machine to be used therefor are then explained.

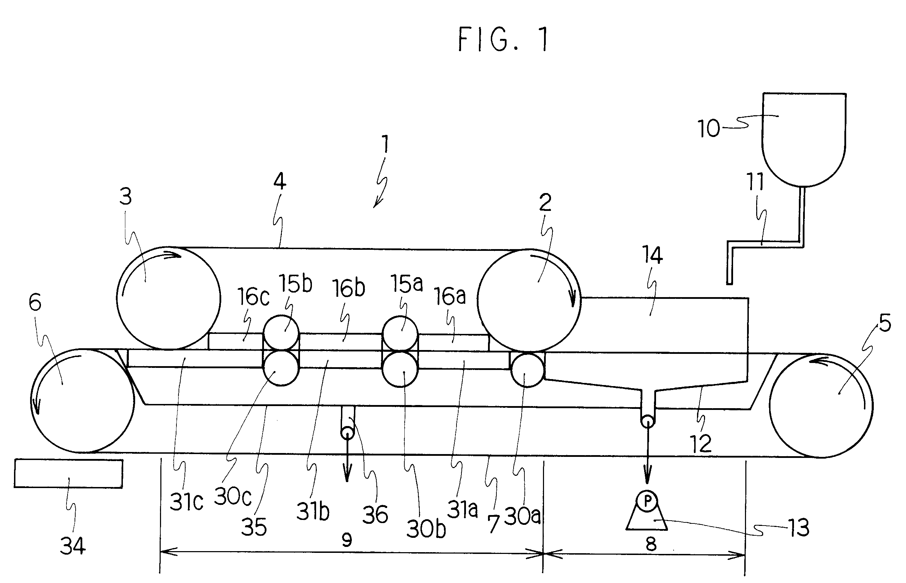

Fig. 1 is an illustrative side view of a belt press dewatering machine of one example of the present invention.

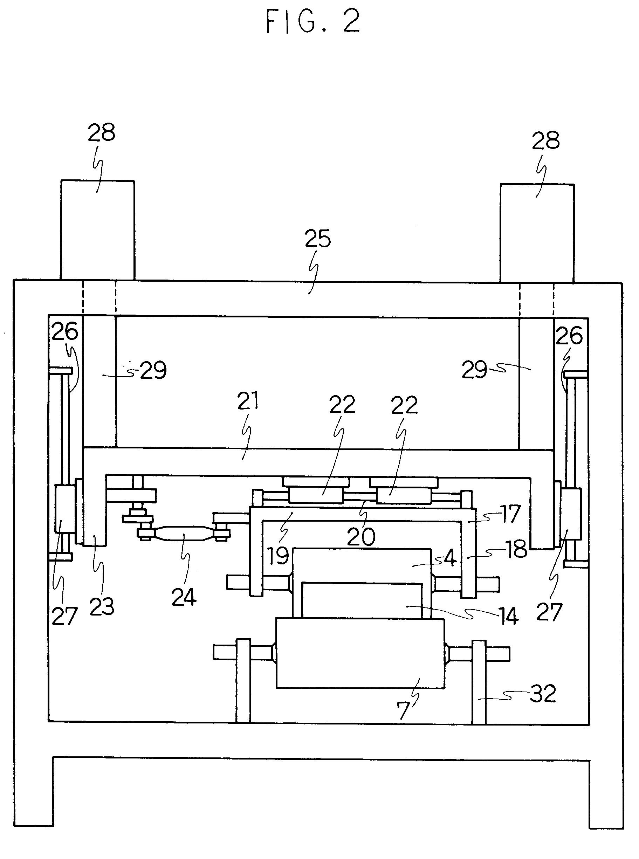

Fig. 2 is an illustrative front view of a belt press dewatering machine of one example of the present invention.

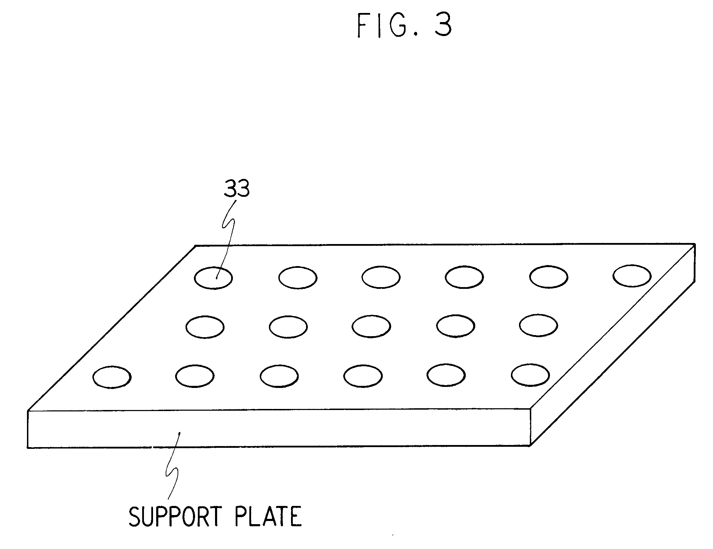

Fig. 3 is a perspective view of a support plate of a belt press dewatering machine of one example of the present invention.

The machine 1 is so constructed that the solid wet materials are sandwiched between the upper filter cloth belt 4 which is the endless belt wound on the rolls 2 and 3 and the lower filter cloth belt 7 which is the endless belt wound on the rolls 5 and 6 with the belts having surfaces opposite to each other, thus removing water from the materials. As shown in Fig. 1, there is a suction and filtration zone 8 provided upstream of the zone where the belts are opposite to each other, and a pressure dewatering zone 9 between the rolls 2 and 3.

The solid wet materials to be treated are supplied from the reservoir tank 10 through the feeding section 11 onto the lower filter cloth belt 7 in the above-mentioned suction and filtration zone 8. In the lower filter cloth belt 7, the receiving vessel 12 of a funnel shape is disposed inside the lower filter cloth belt 7 so that the edge of the opening of the vessel closely contacts the inner surface of the lower filter cloth. The receiving vessel 12 of a funnel shape is connected, under the bottom thereof, with the water-sealed vacuum pump 13 for dewatering by suction and filtration. Also the enclosure 14 " 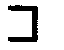 "-shaped when viewed from above of the machine is provided so that the facing two sides thereof are rising in parallel with both sides of the lower filter cloth belt 7 to enable the solid wet materials not to drop from the lower filter cloth belt 7 when fed to the suction and filtration zone 8. The enclosure 14 is placed at a right angle to the lower filter cloth belt 7 so as to closely contact the belt 7 without any gap therebetween.

The solid wet materials water-removed at the above-mentioned suction and filtration zone 8 is then fed to the pressure dewatering zone 9 by means of the lower filter cloth belt 7 with the materials being loaded thereon. The pressure dewatering zone 9 comprises the upper filter cloth belt 4 and the lower filter cloth belt 7. The upper filter cloth belt 4 is wound on the rolls 2 and 3. Inside the upper filter cloth belt 4 and between the rolls 2 and 3 are provided the support rolls 15a and 15b and the support plates 16a, 16b and 16c. The rolls 2 and 3, support rolls 15a and 15b and support plates 16a, 16b and 16c are all supported with the arm 18 of the lower support 17 as shown in Fig. 2. The lower support 17 comprises the upper member 19 and the arms 18 extending downward at both ends of the upper member. On the upper member 19 are mounted the rail 20 in the crosswise direction (at a right angle to the running direction of the filter cloth) in Fig. 2. Over the lower support 17 is placed the upper support 21, and the lower support 17 is supported with the upper support 21 so as to be movable in the transverse direction by passing the above-mentioned rail 20 through the support members 22 mounted on the upper support 21. At one side (left side in Fig. 2) of the lower support 17 and between the portion 23 extending downward from the upper support 21 and the lower support 17, there is provided the vibrating device 24 in the state connecting all of them. The lower support 17 is vibrated in the transverse direction by driving the vibrating device 24 through the support members 22 of the upper support 21 and the rail 20 in the state that the vibrating device 24 is suspended.

Also around the upper support 21 is provided the frame 25, and at the sides inside the frame 25, the rails 26 extending vertically are provided. Outside the downward extending portion 23 of the upper support 21 are provided the support members 27, and the upper support 21 is supported at the side of the frame 25 so as to be movable vertically by passing the rails 26 through the support members 27. On the top of the frame 25 are disposed the air cylinders 28 which are connected integrally with the upper support 21 by means of the support bars 29. The air cylinders 28 give a force to the lower support 17 through the support bars 29, upper support 21, support members 22 and rail 20, and the force is further conveyed to the rolls 2 and 3, support rolls 15a and 15b and support plates 16a, 16b and 16c, which are arranged inside the upper filter cloth belt 4 through the respective shafts, thus, as a result, flexibly pressing the upper filter cloth belt 4 downward.

The lower filter cloth belt 7 is wound on the rolls 5 and 6, and the support rolls 30a, 30b and 30c and the support plates 31a, 31b and 31c are disposed between the rolls 5 and 6 inside the lower filter cloth belt 7. The rolls 5 and 6, support rolls 30a, 30b and 30c and support plates 31a, 31b and 31c are all supported by one support leg 32 installed at the lower part of the frame 25 as shown in Fig. 2.

The solid wet materials are sandwiched in a gap between surfaces opposite to each other of the upper filter cloth belt 4 and the lower filter cloth belt 7, and are pressed to be dewatered. At the time of pressing, sagging of the upper filter cloth belt 4 and the lower filter cloth belt 7 tends to occur between each roll. To prevent it, there are provided the support rolls 15a, 15b, 30a, 30b and 30c and support plates 16a, 16b, 16c, 31a, 31b and 31c. Fig. 3 is a typical showing of the support plates 16a, 16b, 16c, 31a, 31b and 31c which are provided with a plurality of through holes 33 in the direction at a right angle to the surface contacting the filter cloth as shown in Fig. 3 so as to make water removed from the solid wet materials by pressure dewatering to easily flow out from between the facing belts.

The upper filter cloth belt 4 and lower filter cloth belt 7 are so designed that the running speeds of the belts can be made different by changing the rotation speeds of the rolls 2, 3 and 5,6 which are driven by a drive unit not shown in the figure. The rolls may be driven by the respective two driving units or one drive unit through a transmission.

The solid wet materials dewatered in the suction and filtration zone 8 and pressure dewatering zone 9 are finally dropped into the receiving pan 34 disposed under the roll 6. The solid wet materials sticked to the filter cloth belts may be dropped by using a scraper or the like, if necessary. Also water removed by the belt press dewatering machine is collected in the water tank 35 located inside the lower filter cloth belt 7 and is drained from the outlet 36.

The present invention is explained in more detail by Example, but are not limited thereto.

### Preparation 1

A 6 ℓ stainless steel (SUS 316) autoclave equipped with anchor-shaped stainless steel agitation blades and a jacket for temperature control was charged with 2,980 mℓ of deionized water, 130 g of solid paraffin wax having a melting point of 56°C and 4.4 g of ammonium perfluorooctanoate, and with heating to 85°C, oxygen in the system was removed by replacing with nitrogen gas three times and TFE gas two times. The inner pressure was raised to 7.5 kg/cm²G with TFE gas, agitation was conducted at 250 rpm, and the inside temperature was kept at 85°C. Then the inner pressure of the autoclave was raised to 8.0 kg/cm²G by pressure-filling, with TFE gas, the solution prepared by dissolving 18.9 mg of ammonium persulfate (APS) into 20 mℓ of water. The reaction was accelerated, but the reaction temperature was kept at 85°C and the agitation, at 250 rpm. TFE gas was fed continuously to keep the inner pressure of the autoclave at 8.0 ± 0.5 kg/cm²G. The agitation and TFE gas supply were stopped when 1,200 g of TFE gas was consumed in the reaction, and immediately gases were released from the autoclave until normal pressure is reached, thus completing the reaction. Total reaction time was 9 hours, and the number average particle size of the PTFE particles in the obtained aqueous PTFE dispersion was 0.28 µm.

Then the aqueous PTFE dispersion (standard specific weight of PTFE contained: 2.18, number average particle size of PTFE particles contained: 0.28 µm, PTFE particle content: 13 % by weight) having a specific weight of 1.08 was obtained by adjusting the specific weight by adding pure water therein.

A 5,000 mℓ vessel with an agitator was charged with 1,000 mℓ of the obtained aqueous PTFE dispersion and a liquid paraffin (lubricant less soluble with water) (IP SOLVENT 2028 available from Idemitsu Sekiyu Kagaku Kabushiki Kaisha, surface tension at 25°C: 25.2 dyn/cm) in an amount (a volume at 25°C based on 100 g of PTFE: 31.5 mℓ) corresponding to 25 parts by weight based on 100 parts by weight of the PTFE particles. In one minute after starting the agitation at 450 rpm, 10 mℓ of 50 % aqueous nitric acid solution (coagulant) was added, and the agitation was continued until the coagulation was completed. After the completion of the coagulation, the coagulated particles were separated by eliminating water separated in the vessel, and the wet PTFE powder containing the lubricants was obtained by washing the particles with water and then removing water with a sieve.

### Preparation 2

The wet PTFE powder containing the lubricants was obtained in the same manner as in Preparation 1 except that as the lubricants, ISOPAR M (liquid paraffin available from Exxon Kagaku Kabushiki Kaisha, surface tension at 25°C: 24.1 dyn/cm) was used instead of IP SOLVENT 2028.

### Preparation 3

An amount of 1,000 mℓ of an aqueous PTFE dispersion, of which specific weight was adjusted to 1.08 in Preparation 1, was charged in a 5,000 mℓ vessel with an agitator, and agitated at 450 rpm to be in the form of a slurry. At the stage where the dispersion became in the form of a slurry, a liquid paraffin (IP SOLVENT 2028) was added in an amount corresponding to 25 parts by weight based on 100 parts by weight of the PTFE particles, and the agitation was continued until the completion of the coagulation. No coagulant was added. After the completion of the coagulation, the wet PTFE powder containing the lubricants was obtained by removing water with a sieve.

### Preparation 4

The aqueous PTFE dispersion was prepared in the same manner as in Preparation 1, and then the aqueous PTFE dispersion (SSG of PTFE: 2.18, number average particle size of PTFE particles: 0.28 µm, content of PTFE particles: 13 % by weight) having a specific weight of 1. 08 was obtained by adjusting the specific weight by adding pure water therein. A 5,000 mℓ vessel with an agitator was charged with 1,000 mℓ of the obtained aqueous PTFE dispersion, liquid paraffin (IP SOLVENT 2028) in an amount (a volume at 25°C based on 100 g of PTFE: 44.3 mℓ) corresponding to 35 parts by weight based on 100 parts by weight of the PTFE particles, and carbon black (filler: BELL PEARL C-2000 available from Kanebo Kabushiki Kaisha) in an amount corresponding to 35 parts by weight based on 100 parts by weight of the PTFE particles. In one minute after starting the agitation at 450 rpm, 10 mℓ of 50 % aqueous nitric acid solution was added, and the agitation was continued until the coagulation was completed. The wet PTFE powder containing the lubricants and fillers was obtained by washing with water and then removing water with a sieve.

### Comparative Preparation 1

The PTFE powder containing the lubricants was obtained by drying the wet PTFE powder containing the lubricants (liquid paraffin), which was obtained in Preparation 1, at 110°C for ten hours to remove water therefrom.

### Comparative Preparation 2

The wet PTFE powder containing the lubricants was obtained in the same manner as in Preparation 1 except that as the lubricants, SMOIL P-55 (available from Matsumura Sekiyu Kabushiki Kaisha, boiling point: about 350°C) was used instead of IP SOLVENT 2028 in the same amount as in Preparation 1. Then the PTFE powder containing the lubricants was obtained by drying in the same manner as in Comparative Preparation 1.

### Comparative Preparation 3

The wet PTFE powder was obtained by the coagulation and water removal in the same manner as in Preparation 1 except that the lubricants (liquid paraffin) was not added. The obtained wet PTFE powder was then dried at 130°C for 15 hours, and the PTFE fine powder (SSG of PTFE: 2.18, average PTFE particle size: 500 µm) was obtained. The lubricants (IP SOLVENT 2028) were then mixed with the obtained PTFE fine powder in an amount corresponding to 25 parts by weight based on 100 parts by weight of the PTFE particles for 20 minutes with a Rocking mixer (a Rocking mixer available from Aichi Denki Kabushiki Kaisha). After mixing, the PTFE powder (water content 0 %) containing the lubricants was obtained by ripening at 25°C for ten hours.

### Example 1

The wet PTFE powder containing the lubricants, which was obtained in Preparation 1, was extruded at a cylinder temperature of 30°C and a dice temperature of 50°C with a twin screw extruder with two screws rotating in opposite directions (LABO PLASTOMILL available from Toyo Seiki Kabushiki Kaisha) having a 25 mm inside diameter of a cylinder to obtain sheet-like extrudates. The screw compression ratio was 1.2, L/D was 7, and the number of rotations was 20 rpm. The obtained extrudates were pressed by reduction rolls in the same direction as the extruding direction to prepare a sheet. Water content in the sheet was not more than 1 %.

The sheet was heated up from normal temperature to 365°C over one hour, and kept at 365°C for 10 minutes for sintering. The lubricants were removed during these operations. The surface of the sintered sheet was smooth. Also tensile strength in an extruding direction of the sheet was measured by a method specified in JIS K 6891. The results are shown in Table 1.

### Examples 2 and 3

The wet PTFE powder containing the lubricants, which was obtained in Preparations 2 and 3 was extruded respectively in the same manner as in Example 1. The obtained extrudates were pressed by reduction rolls to prepare the sheets. Water contents of the sheets were all not more than 1 %.

These sheets were sintered in the same manner as in Example 1. Surface condition of the sheets was observed, and tensile strength was measured. The results are shown in Table 1.

### Example 4

The wet PTFE powder containing the lubricants and fillers, which was obtained in Preparation 4 was made up into the sheet in the same manner as in Example 1 by the use of the same screw extrusion machine and reduction rolls used in Example 1. Water content of the sheet was not more than 1 %.

The sheet was sintered in the same manner as in Example 1. Surface condition of the sheet was observed and tensile strength was measured. The results are shown in Table 1.

### Example 5

The wet PTFE powder containing the lubricants, which was obtained in Preparation 1, was kneaded with a kneader for noodle making (available from Kabushiki Kaisha Okuba Tekkosho) to obtain a kneaded article. The obtained kneaded article was pressed by the same reduction rolls used in Example 1 to give sheets. One sheet was laid upon another one to further press them by the reduction rolls. Water content of the laminated sheet was not more than 1 %.

The sheet was sintered in the same manner as in Example 1. Surface condition of the sheet was observed and tensile strength was measured. The results are shown in Table 1.

### Example 6

The wet PTFE powder containing the lubricants, which was obtained in Preparation 1, was pressed by the same reduction rolls used in Example 1. The powder was passed through the rolls five times to obtain a sheet. Water content of the sheet was not more than 1 %.

The sheet was then sintered in the same manner as in Example 1. Surface condition of the sheet was observed and tensile strength was measured. The results are shown in Table 1.

### Comparative Example 1

The PTFE powder containing the lubricants, which was obtained in Comparative Preparation 3, was charged in the preforming machine to be pressed and preformed into a cylindrical form. Then the preformed powder was extruded with the paste extrusion machine to give a round bar. Inside diameter of the cylinder of the machine was 30 mm, inside diameter of the nozzle was 5 mm, and a sectional area ratio of the cylinder to the nozzle was 36. The obtained round bar was pressed by the same reduction rolls used in Example 1 in the extruding direction to give a sheet. The sheet was dried and sintered in the same manner as in Example 1. Surface condition of the sheet was observed and tensile strength was measured. The results are shown in Table 1. The tensile strength and surface condition were the same as those obtained in Example 1. In this method, drying of the wet PTFE powder and ripening of the lubricants required much time.

**Table 1**

| | Ex.1 | Ex.2 | Ex.3 | Ex.4 | Ex.5 | Ex.6 | Com. Ex.1 |
|---|---|---|---|---|---|---|---|
| Tensile strength (kgf/cm²) | 250 | 250 | 250 | 150 | 240 | 245 | 250 |
| Surface condition | smooth | smooth | smooth | smooth | smooth | smooth | smooth |

### Example 7

A glass cloth (WEA05E105F206 available from Nitto Boseki Kabushiki Kaisha) was immersed in the aqueous PTFE dispersion (prior to adjusting a specific weight) obtained in Preparation 1. The both sides of the obtained glass cloth was filled with the wet PTFE powder (An amount of ISOPAR M added was 30 parts by weight based on 100 parts by weight of the PTFE particles) obtained in Preparation 2 by laying the cloth and powder on the same reduction rolls as used in Example 1.

Water content of the PTFE powder filled in the cloth was not more than 1 %. Also the above-mentioned wet PTFE powder containing the lubricants was kneaded with the same kneader used in Example 5 to obtain a kneaded article. This kneaded article was coated on both sides of the above-mentioned glass cloth with the above-mentioned reduction rolls to obtain a laminated article. Water content of the coated PTFE was not more than 1 %. The laminated article was sintered in the same manner as in Example 1. The adhered amount of PTFE on the obtained laminated article is shown in Table 2. The adhered amount of PTFE is the value (%) obtained by dividing the weight of PTFE in the laminated article by the weight of the laminated article and then by multiplying by 100. Whether or not there is a delamination was observed with a video microscope available from Sony Corporation. The results are shown in Table 2.

### Comparative Example 2

The same glass cloth as used in Example 7 was immersed in the commercially available aqueous PTFE dispersion (Polyflon TFE dispersion D-2 available from Daikin Industries, Ltd.), and then passed continuously through an oven of a temperature from room temperature (25°C) to 380°C to be dried and sintered. Drying and sintering were repeated three times until the PTFE filling amount reached 60 %. The amount of PTFE for each filling and the existence of delamination are shown in Table 2.

**Table 2**

| | Ex.7 | Com.Ex.2 |
|---|---|---|
| PTFE coating amount (%) | 1st coating 30 | 1st coating 46 |
| | 2nd coating 60 | 2nd coating 53 |
| | | 3rd coating 60 |
| Delamination | None | None |

### Example 8

The wet PTFE powder containing the lubricants and fillers, which was obtained in Preparation 4, was filled in the porous metal plate (thermal spraying of bronze onto the iron plate, porous layer thickness: 200 µm) by means of the same reduction rolls used in Example 1. Water content of PTFE in this powder-filled article was not more than 1 %. This article was sintered by heating up to 380°C. Surface condition of the sintered article was smooth. The article thickness was 30 µm, and there was no delamination.

### Comparative Example 3

The same glass cloth as used in Example 7 was immersed into the aqueous PTFE dispersion (prior to adjusting a specific weight, specific weight: 1.20, PTFE particle content: 30 % by weight) obtained in Preparation 1, and then heated from normal temperature to 380°C. The first filling amount was 10 to 20 %, but after the first filling, there was no filling due to repelling of the dispersion.

### Comparative Examples 4 and 5

Molding was conducted by the use of PTFE powder containing the lubricants, which was obtained in Comparative Preparation 3, in the same manner as in Examples 1 and 5, but the sheets could not be continuous. This may be because the lubricants were not dispersed homogeneously in the PTFE powder and the fibrillation occurred at the parts where no lubricants exist.

### Comparative Example 6

Molding was conducted by the use of PTFE powder containing the lubricants, which was obtained in Comparative Preparation 3, in the same manner as in Example 6, but there was obtained the sheet partially holed. This may be because in the PTFE powder, there were the parts where no lubricants exist, and the sheet was not continuous there.

### Comparative Example 7

Molding was conducted by the use of PTFE powder containing the lubricants, which was obtained in Comparative Preparation 3, in the same manner as in Example 7. Though the PTFE film could be formed on the surface of the glass cloth, the PTFE powder was not filled among the fibers of the glass cloth and was not adherent to the glass cloth. This may be because the parts of PTFE powder where no lubricants exist were fibrillated.

### Comparative Example 8

Molding was conducted in the same manner as in Example 1 in vain by the use of PTFE powder containing the lubricants, which was obtained in Comparative Preparation 1. In order to find the reason for that, the wet PTFE powder containing the lubricants, which was obtained in Preparation 1, was dried at 260°C for 10 hours and there was the same decrease in weight as in the case of 10 hour drying at 110°C, and thus it was found that when water was removed in Comparative Preparation 1, the lubricants were also removed.

### Comparative Example 9

Molding and sintering were conducted in the same manner as in Example 1 by the use of PTFE powder containing the lubricants, which was obtained in Comparative Preparation 2, but unnecessary coloring occurred. This may be because the lubricants could not be completely removed from the sheet.

### Example 9

The aqueous PTFE dispersion was prepared in the same manner as in Preparation 1, and was supplied quantitatively by the use of the mass flowmeter (J-MASS II available from Tokico Kabushiki Kaisha) and air driven control valve to a Pipe Line Homomixer (PL-2SL available from Tokushu Kika Kogyo Kabushiki Kaisha), of which shaft portion was water-sealed by flushing with pure water. Then liquid paraffin (IP SOLVENT 2028) was added to the dispersion made up into a slurry by shearing, in an amount corresponding to 25 parts by weight based on 100 parts by weight of PTFE particles. The aqueous PTFE dispersion in the form of a slurry was supplied to a Pipe Line Homomixer of the same type, and agitated therein to obtain the wet PTFE powder containing the lubricants. The obtained wet PTFE powder containing the lubricants was fed continuously to the suction and filtration zone 8 of the belt press dewatering machine of the present invention, wherein the powder is dewatered to be granulated. The granulated PTFE powder containing the lubricants was continuously fed to the paste extrusion machine to obtain extrudates which were then pressed in the extruding direction with the same reduction rolls used in Example 1, thus preparing sheets. The sheets were dried with steam to remove the lubricants. Surface conditions of the sheets were observed, and the tensile strength measured in the same manner as in Example 1 was 250 kgf/mm². This method was conducted successively from co-coagulation to preparing of the sheets.

### Example 10

The wet PTFE powder containing the lubricants, which was prepared in Preparation 1, was fed from the reservoir tank 10 of the belt press dewatering machine 1 shown in Fig. 1 through the feeding section 11 to the suction and filtration zone 8. In that case the reservoir tank 10 may be a coagulation tank for the coagulation of the PTFE dispersion. In the suction and filtration zone 8, the wet PTFE powder containing the lubricants were nearly dewatered by means of the water-sealed vacuum pump 13 except water deposited on the surface thereof and contained therein.

The wet PTFE powder containing the lubricants was, after filtrated, conveyed to the pressure dewatering zone 9 by means of the lower filter cloth belt 7. In the pressure dewatering zone 9, the wet PTFE powder filtrated in the preceding zone was sandwiched between the upper filter cloth belt 4 and the lower filter cloth belt 7, and was pressure-dewatered, receiving a shear by making running speeds of the belts being different from each other and vibrating the upper filter cloth belt 4 in the transverse direction thereof.

In this case the wet PTFE powder containing the lubricants was pressed and dewatered between the upper filter cloth belt 4 and the lower filter cloth belt 7 with the surfaces of the belts contacting the powder being changed successively. In general, in pressure dewatering, the water removal efficiency of the treating article differs between the surface contacting the filter cloth belts and the inside of the article. It is natural that the inside of the article is rather difficult to be dewatered. This is the same as in the wet PTFE powder containing the lubricants. In order to decrease the water content inside the wet PTFE powder containing the lubricants as much as possible, it is effective to make running speeds of the upper and lower filter cloth belts being different from each other by running the belt 4 faster or slower than the belt 7 and vibrate the upper filter cloth belt 4 in the transverse direction at a level with the running direction of the belts, thus applying a shear to the wet PTFE powder containing the lubricants and successively changing the surfaces of the powder contacting the filter cloth belts, and thereby the water removal efficiency is improved.

The direction and amount of the shear to be applied to the wet PTFE powder containing the lubricants can also be optionally adjusted by changing running speeds of each endless filter cloth belt and changing the speed and amplitude of the vibration in the transverse direction of the belt.

In the dewatering process of the present invention, the solid wet materials or the wet PTFE powder after dewatering can be made up into the forms of a sheet, bar, ellipse and granule by changing running speeds of each filter cloth belt and vibration speed of the belt in the transverse direction thereof. Also it is possible to obtain a kneading effect which could not be achieved by the conventional dewatering process.

In the present invention, since the primary particles of the wet PTFE powder containing the lubricants are covered uniformly with the lubricants, the powder is difficult to be fibrillated. The powder need be fibrillated to a proper extent for obtaining the preferred molded article. However the conventional machine gives only too strong or too weak shear. Too strong shear cannot be used, while in case of too weak shear, it is necessary to increase or repeat shearing. It is also difficult to control the direction of shearing. The belt press dewatering machine of the present invention can provide shearing in an optional direction and amount and at the same time remove water. Thus the use of the machine for the molding of the present invention can assure very efficient and effective functioning thereof.

### INDUSTRIAL APPLICABILITY

According to the process for preparing the molded PTFE with the lubricants of the present invention, the number of steps required for preparing is few, thus enabling PTFE to be molded in a short period of time and at low cost. Also the lubricants are dispersed homogeneously, thereby causing no molding failure and providing the molded article having a smooth surface and being excellent in mechanical properties. Also the molded PTFE can be formed efficiently on the surface of porous article.

In the dewatering process of the present invention, the solid wet materials or the wet PTFE powder after dewatering can be made up into the forms of a sheet, bar, ellipse and granule by changing running speeds of each filter cloth belt and vibration speed of the belt in the transverse direction thereof. Also it is possible to obtain a kneading effect which could not be achieved by the conventional dewatering process. Also the present invention can provide a dewatering machine which can be used for the above-mentioned dewatering process.

Also in the present invention, the above-mentioned dewatering process can be adopted for preparing the molded PTFE.

## Claims

1. A process for preparing a molded polytetrafluoroethylene with a lubricant, comprising;
a step for adding the lubricant to an aqueous polytetrafluoroethylene dispersion to co-coagulate polytetrafluoroethylene and the lubricant and obtain a wet polytetrafluoroethylene powder containing the lubricant,
a step, if necessary, for adjusting a water content of said wet powder,
a step for molding said wet powder to obtain a molded article, and
a step for removing the lubricant from said molded article.

2. The process for preparing the molded polytetrafluoroethylene with the lubricant of Claim 1, wherein co-coagulation is continuously conducted with a high shear machine in the step for obtaining the wet powder.

3. The process for preparing the molded polytetrafluoroethylene with the lubricant of Claims 1 or 2, wherein a ram extrusion molding machine and reduction rolls are used in the step for obtaining the molded article.

4. The process for preparing the molded polytetrafluoroethylene with the lubricant of any of Claims 1 to 3, wherein the aqueous polytetrafluoroethylene dispersion is one obtained by an emulsion polymerization of tetrafluoroethylene.

5. The process for preparing the molded polytetrafluoroethylene with the lubricant of any of Claims 1 to 4, wherein polytetrafluoroethylene is a modified polytetrafluoroethylene.

6. The process for preparing the molded polytetrafluoroethylene with the lubricant of any of Claims 1 to 5, wherein a filler is also added at the time of co-coagulation.

7. The process for preparing the molded polytetrafluoroethylene with the lubricant of any of Claims 1 to 6, wherein the lubricant is removed by any of heating, extraction, steam drying or in combination thereof in the step for removing the lubricant.

8. A process for preparing a molded polytetrafluoroethylene with a lubricant, comprising;
a step for adding the lubricant to an aqueous polytetrafluoroethylene dispersion to co-coagulate polytetrafluoroethylene and the lubricant and obtain a wet polytetrafluoroethylene powder containing the lubricant,
a step, if necessary, for adjusting a water content of said wet powder,
a step for filling a porous article with said wet powder to obtain a porous article filled with wet powder, and
a step for removing the lubricant from said porous article filled with wet powder.

9. The process for preparing the molded polytetrafluoroethylene with the lubricant of any of Claims 1 to 8, wherein the lubricant is one having a boiling point not more than a melting point of polytetrafluoroethylene.

10. The process for preparing the molded polytetrafluoroethylene with the lubricant of any of Claims 1 to 9, wherein the lubricant is one having a property less miscible with water.

11. The process for preparing the molded polytetrafluoroethylene with the lubricant of any of Claims 1 to 10, wherein the lubricant is at least one selected from the group consisting of solvent naphtha, petroleum ether and liquid paraffin.

12. The process for preparing the molded polytetrafluoroethylene with the lubricant of any of Claims 1 to 11, wherein the aqueous polytetrafluoroethylene dispersion is agitated to be in the form of a slurry and then the lubricant is added thereto.

13. The process for preparing the molded polytetrafluoroethylene with the lubricant of any of Claims 1 to 12, wherein the molded article is un-sintered.

14. The process for preparing the molded polytetrafluoroethylene with the lubricant of any of Claims 1 to 13, which further includes a step for sintering said molded article.

15. A process for preparing a molded polytetrafluoroethylene with a lubricant, comprising;
a step for adding the lubricant to an aqueous polytetrafluoroethylene dispersion to co-coagulate polytetrafluoroethylene and the lubricant and obtain a wet polytetrafluoroethylene powder containing the lubricant,
a step for adjusting a water content of said wet powder,
a step for molding said wet powder to obtain a molded article, and
a step for removing the lubricant from said molded article.

16. A process for preparing a molded polytetrafluoroethylene with a lubricant, comprising;
a step for adding the lubricant to an aqueous polytetrafluoroethylene dispersion to co-coagulate polytetrafluoroethylene and the lubricant and obtain a wet polytetrafluoroethylene powder containing the lubricant,
a step for adjusting a water content of said wet powder,
a step for filling a porous article with said wet powder to obtain a porous article filled with wet powder, and
a step for removing the lubricant from said porous article filled with wet powder.

17. The process for preparing the molded polytetrafluoroethylene with the lubricant of Claim 15 or 16, wherein co-coagulation is continuously conducted with a high shear machine in the step for obtaining the wet powder.

18. The process for preparing the molded polytetrafluoroethylene with the lubricant of any of Claims 15 to 17, wherein a ram extrusion molding machine and reduction rolls are used in the step for obtaining the molded article.

19. The process for preparing a molded polytetrafluoroethylene with the lubricant of any of Claims 15 to 18, wherein the lubricant is removed by any of heating, extraction, steam drying or in combination thereof in the step for removing the lubricant.

20. A belt press dewatering machine wherein solid wet materials are dewatered by using running one pair of strip-like filter cloth belts which have surfaces opposite to each other, and sandwiching said materials in a gap formed between the surfaces, characterized in that the machine is equipped with means for making running speeds of the belts being different from each other, and means for vibrating at least one of the belts in the transverse direction of the belt.

21. The belt press dewatering machine of Claim 20, wherein the solid wet materials are wet polytetrafluoroethylene powder containing the lubricant.

22. A process for dewatering solid wet materials by using running one pair of strip-like filter cloth belts which have surfaces opposite to each other, and sandwiching said materials in a gap formed between the surfaces, characterized in that running speeds of the belts are made being different from each other and at least one of the belts is vibrated in the transverse direction of the belt.

23. The process for dewatering of Claim 22, wherein the solid wet materials are wet polytetrafluoroethylene powders containing the lubricant.

24. The belt press dewatering machine employed in the step for adjusting the water content of the wet powder of any of Claims 15 to 19, wherein the solid wet materials are dewatered by using running one pair of strip-like filter cloth belts which have surfaces opposite to each other, and sandwiching said materials in a gap formed between the surfaces, characterized in that the machine is equipped with means for making running speeds of the belts being different from each other, and means for vibrating at least one of the belts in the transverse direction of the belt.

25. The belt press dewatering machine of Claim 24, wherein the solid wet materials are wet polytetrafluoroethylene powders.

26. The process for dewatering the solid wet materials, employed in the step for adjusting the water content of the wet powder of any of Claims 15 to 19 and characterized in that in dewatering said solid wet materials by using running one pair of strip-like filter cloth belts which have surfaces opposite to each other, and sandwiching said materials in a gap formed between the surfaces, running speeds of the belts are made being different from each other, and at least one of the belts is vibrated in the transverse direction of the belt.

27. The process for dewatering of Claim 26, wherein the solid wet materials are wet polytetrafluoroethylene powders containing the lubricant.
